# EUROPÄISCHE PATENTANMELDUNG

(11) **EP 1 505 414 A1**
(43) Veröffentlichungstag der Anmeldung: **09.02.2005**
(21) Anmeldenummer: 04016873.4
(22) Anmeldetag: 16.07.2004
(51) Int. Cl.: G02B 6/00, G02F 1/13357

(54) **Verfahren zur Herstellung von Streulichtstrukturen an flächigen Lichtleitern**

(30) Priorität: 08.08.2003 DE 10336352
(71) Anmelder: Schott AG, 55122 Mainz (DE)
(72) Erfinder: Schultheis, Bernd, 55270 Schwabenheim (DE); Engelmann, Harry, 55218 Ingelheim (DE); Ottermann, Clemens, Dr., 65795 Hattersheim (DE)
(74) Vertreter: Fleck, Hermann-Josef, Dr.-Ing.

(57) **Zusammenfassung**

Die Erfindung betrifft ein Verfahren zur Herstellung von Streulichtstrukturen (20) an flächigen Lichtleitern (10), in welche Licht zur Sichtbarmachung der Streulichtstrukturen (20) einkoppelbar ist, wobei die Streulichtstrukturen (20) gemäß einer vorgegebenen Anordnungsvorschrift auf einer Oberfläche (18,) des Lichtleiters (10) aufgebracht werden. Die Streulichtstrukturen (20) werden im Non-Impact-Verfahren direkt auf den Lichtleiter (10) aufgebracht.

Das Aufbringen der Streulichtstrukturen (20) kann durch Bedrucken mittels eines rechnergesteuerten, berührungslos wirkenden Druckkopfes oder durch elektrophotographisches Beschichten erfolgen.

## Beschreibung

Die Erfindung betrifft ein Verfahren zur Herstellung von Streulichtstrukturen an flächigen Lichtleitern, in welche Licht zur Sichtbarmachung der Streulichtstrukturen einkoppelbar ist, wobei die Streulichtstrukturen gemäß einer vorgegebenen Anordnungsvorschrift auf einer Oberfläche des Lichtleiters aufgebracht werden.

Es ist bekannt, zu Werbezwecken oder als Hinweisschilder "freischwebende" leuchtende Schriftzüge und Darstellungen einzusetzen. Insbesondere gestatten derartige Streulichtstrukturen die Ausbildung individueller Designerlösungen für beleuchtete einfarbige oder farbige Anzeigemittel.

Aus dem Stand der Technik ist bekannt, in Platten aus Glas oder transparentem Kunststoff Symbole oder Schriftzeichen einzugravieren, einzuätzen oder aufzudrucken. Auch lassen sich derartige Strukturen in das Platteninnere mittels Lasertechniken einbringen. Durch Ausleuchten der Platten mittels Lichteinkopplung über die Plattenkanten werden die Strukturen sichtbar bzw. zum leuchten angeregt. Für die Lichteinkopplung werden üblicherweise Glühlampen, Leuchtstoffröhren, Kaltkathodenröhren (CCFL), Lichtleitfasern, Leuchtdiodenanordnungen (LEDs), organische Leuchtdioden (OLEDs) oder Elektroluminszenz erzeugende Einrichtungen (EL) verwendet.

Insbesondere bei der Hinterleuchtung von Flüssigkristallanzeigen und LCD-Bildschirmen wird beispielsweise das Siebdruckverfahren in großen Stückzahlen angewendet. Bei derartigen Bildschirmen, die beispielsweise bei transportablen Computern (Laptops) zum Einsatz kommen, wird Licht von der Seite in einen flächigen Lichtleiter eingekoppelt und an rückseitig aufgebrachten Streuzentren Richtung Anzeige ausgekoppelt. Die Verteilung der Streuzentren ist dabei so gewählt, dass eine möglichst gleichmäßige Lichtverteilung erzeugt wird. Insbesondere an demjenigen Randbereich der Anzeige, an dem das Licht eingekoppelt wird, sind weniger Streuzentren angeordnet, wohingegen zur Mitte des Bildschirms bzw. des Lichtleiters hin die Dichte der Streuzentren zunimmt. Um eine uniforme Lichtauskopplung zu erreichen, sind die aufzubringenden Strukturen sehr komplex und nur aufwendig mit "Standardverfahren" wie Siebdruck herzustellen. Zudem sind die Streuzentren rasterförmig als Punktraster angeordnet. Damit diese Punktstruktur vom Betrachter nicht als einzelne Lichtpunkte zu sehen sind, wird nach Stand der Technik zwischen dem Lichtleiter und der LCD-Anzeige ein Diffusor angeordnet, welcher als Streuscheibe aus Kunststoff ausgebildet ist.

Die bekannten Ätz- und Lithographieverfahren sind insbesondere bei der Strukturierung größerer Flächen sehr kostenintensiv, da teuere Photolacke in großen Beschichtungs- und Belichtungsanlagen angewendet werden müssen. Zudem sind derartige Verfahren sehr zeitaufwendig, da sie langen Prozesszeiten unterliegen.

Bei der Herstellung derselben Streulichtstrukturen in großer Stückzahl kann sich der Einsatz von Druck- und Folienverfahren unter Kostengesichtspunkten möglicherweise als sinnvoll erweisen. Allerdings rentiert es nur bei großen Stückzahlen in aufwendiger Vorarbeit individuelle Masken oder Stanzwerkzeuge herzustellen. Insbesondere bei komplexeren Strukturierungsmustern, die beispielsweise feine Linien oder freie separierte Strukturen, wie Innenbereiche von geschlossenen Ringen, aufweisen, ist die Herstellung der Werkzeuge insbesondere bei der Folienübertragung auf die Bauteiloberfläche sehr kritisch in der Handhabung. Auch ist hierbei die erreichbare Mindestauflösung und die "Dynamik" beim gleichzeitigen Drucken sehr breiter und sehr feiner Strukturen stark eingeschränkt. Zudem ist eine gewünschte lokale Variation der Streulichtdicke über unterschiedliche Streulichtstrukturen oder Rasterstrukturen nur schwer zu realisieren.

Lasergestützte Verfahren zur Erzeugung von Streulichtstrukturen, wie beispielsweise die bekannte Laser-Innengravur, bei der im Inneren einer Glasplatte eine Struktur mittels eines Lasers ausgebildet wird, sind ebenfalls teuer und zeitaufwendig in der Ausführung.

Allgemein ist es den aus dem Stand der Technik bekannten Verfahren, wenn überhaupt, so dann nur mit sehr hohem Aufwand möglich, mehrfarbige und/oder intensitätsabgestufte Darstellungen (Graustufen), wie sie beispielsweise bei Bildern oder Photos benötigt werden, herzustellen.

Es ist daher Aufgabe der Erfindung, ein Verfahren zur Herstellung von Streulichtstrukturen an flächigen Lichtleitern anzugeben, mit welchem bei geringen Prozesszeiten und hohem Durchsatz beliebig strukturierte Darstellungen erzeugen lassen.

Diese Aufgabe der Erfindung wird durch die Merkmale des Anspruches 1 gelöst.

Vorteilhafte Weiterbildungen sind in den Unteransprüchen beschrieben.

Demgemäß werden die Streulichtstrukturen im Non-Impact-Verfahren direkt auf den Lichtleiter aufgebracht. Das aufwendige Anfertigen von Masken oder Erstellen von Werkzeugen entfällt. Der Durchsatz ist gegenüber den bekannten Verfahren wesentlich erhöht, da das erfindungsgemäße Beschichtungsverfahren unaufwendig und leicht handhabbar ist. Darüber hinaus erlaubt das Verfahren die Ausbildung beliebiger Motive.

Gemäß einem Grundgedanken der Erfindung kann ein fluides Beschichtungsmaterials aufgebracht werden, das nach dem Aufbringen verfestigt wird. Ein derartiges Material lässt sich insbesondere in Tintenstrahldruck-Vorrichtungen besonders einfach verarbeiten, wobei insbesondere ein aushärtbarer Lack, ein thermoplastisches oder duroplastisches Kunststoffmaterial oder ein Glasfluss verwendet werden kann. Das Aufbringen der Streulichtstrukturen lässt sich dabei durch Bedrucken mittels eines rechnergesteuerten, berührungslosen Druckkopfes leicht ralisieren.

Gemäß einem weiteren Grundgedanken der Erfindung kann als Beschichtungsmaterial ein Toner verwendet werden, der nach dem Aufbringen fixiert wird. Für den Toner kann ein Glasfluss, Glasflusspartikel, ein thermoplastisches oder duroplastisches Polymer oder dergleichen Kunststoffmaterial ausgewählt werden. Insbesondere in elektrophotographischen Druckvorrichtungen kann ein derartiger Toner leicht verarbeitet werden. Dabei kann das Aufbringen der Streulichtstrukturen das Aufbringen einer Schicht durch elektrophotographisches Beschichten umfassen. Für die elektrophotographische Beschichtung kann es notwendig sein, eine leitfähige Elektrodenschicht auf das Lichtleitersubstrat aufzubringen.

Das Beschichtungsmaterial soll im verfestigten bzw. fixierten Zustand transparent oder farbig ausgebildet sein und einen Brechungsindex aufweisen, der annähernd gleich dem Brechungsindex des Lichtleiters ist. Hierdurch kann eine leichte Lichtauskopplung aus dem Lichtleiter realisiert werden.

Für das Substrat des Lichtleiters kann ein Glas, beispielsweise Kalknatronglas oder Optiwhite-Glas, Glas ohne Grünfärbung oder transparenter Kunststoff, beispielsweise Polymethylmethacrylat (PMMA) oder Polycarbonat (beispielsweise Lexan® von GE Plastics) ausgewählt werden. Diese Materialien bilden besonders gute Lichtleiter.

Um farbiges oder weißes Streulicht zu erzeugen, können dem Beschichtungsmaterial farblose oder farbige Streulichtzentren beigefügt werden, deren Brechungsindex vom Brechungsindex des verfestigten bzw. fixierten Beschichtungsmaterial verschieden ist. Dabei können für die Streulichtzentren Farbpigmente oder dergleichen farbige oder farblose Streupartikel aus einem Glas- oder Kunststoffmaterial ausgewählt werden. So lässt sich aus dem ausgehärteten bzw. fixierten Beschichtungsmaterial eine Matrix für die Aufnahme der Streulichtzentren ausbilden

In besonders vorteilhafter Weise kann für den Toner oder das fluide Beschichtungsmaterial ein Material ausgewählt werden, welches die Streulichtzentren aufweist. Somit können in einem separaten Beschichtungsschritt die Streulichtzentren aufgebracht werden.

Eine vorbestimmte Anzahl von Streulichtzentren kann pro Flächeneinheit angeordnet werden. Dies führt zu einer definierten Dichte der Streulichtzentren, wodurch beispielsweise die Farbintensität oder die Streulichtauskopplung beeinflusst wird. Die Streulichtzentren werden dazu gemäß einer vorgegebenen Dichteverteilung auf dem Lichtleiter verteilt.

Beim Aufbringen der Streulichtstrukturen kann zusätzlich eine leitfähigen Elektrodenschicht auf das Lichtleitersubstrat aufgebracht werden. Alternativ kann das Lichtleitersubstrat die leitfähige Elektrodenschicht bereist vorher aufweisen. Die leitfähige Elektrodenschicht ist dabei insbesondere eine Zinnoxid-Schicht, eine Indium-dotierte Zinnoxid-Schicht (ITO) oder dergleichen leitfähige Schicht.

Das Aufbringen des Beschichtungsmaterial kann in einem Verfahrensschritt und das Aufbringen der Streulichtzentren in einem anschließenden Verfahrensschritt geschehen. Damit lässt sich insbesondere die Verteilung der Streulichtzentren variieren. Das Aufbringen der Streulichtzentren kann dazu gemäß einer vorbestimmten Verteilung rechnergesteuert erfolgen. Insbesondere bei unterschiedlich ausgeformten Lichtleitern kann somit eine gleichmäßige Lichtauskopplung erzielt werden.

Nachfolgend wird die Erfindung anhand bevorzugter Ausführungsformen unter Bezugnahme auf die beigefügten Zeichnungen näher erläutert.

Es zeigen:
- Figur 1: in schematischer Ansicht und im Schnitt einen flächigen Lichtleiter, an dessen rechtem Randbereich das Licht einer Lampe eingekoppelt wird und an dessen oberer Fläche eine Streulichtstruktur aufgebracht ist, wobei das Licht nach oben ausgekoppelt wird;
- Figur 2: in schematischer Ansicht und im Schnitt einen flächigen Lichtleiter, an dessen rechtem Randbereich das Licht einer Lampe eingekoppelt wird und an dessen unterer Fläche eine Streulichtstruktur aufgebracht ist, wobei das Licht nach oben, durch den Lichtleiter hindurch ausgekoppelt wird;
- Figur 3: in schematischer Ansicht und im Schnitt einen flächigen Lichtleiter, auf dessen Oberfläche eine aus einer Matrix und Streupartikeln gebildete Streulichtstruktur aufgebracht ist;
- Figur 4: in schematischer Draufsicht einen plattenförmige Lichtleiter, in den an zwei Randbereichen Licht eingekoppelt wird, wobei im mittleren Bereich der Lichtleiterplatte die Dichte der Streupartikel größer als im Randbereich ist;
- Figur 5: in schematischer Ansicht und im Schnitt eine elektrophotographisch arbeitende Vorrichtung zum Aufbringen von Streulichtstrukturen auf die Oberfläche von flächigen Lichtleitern; und
- Figur 6: in schematischer Ansicht und im Schnitt eine nach dem Ink-Jet-Verfahren arbeitende Vorrichtung zum Aufbringen von Streulichtstrukturen auf die Oberfläche von flächigen Lichtleitern

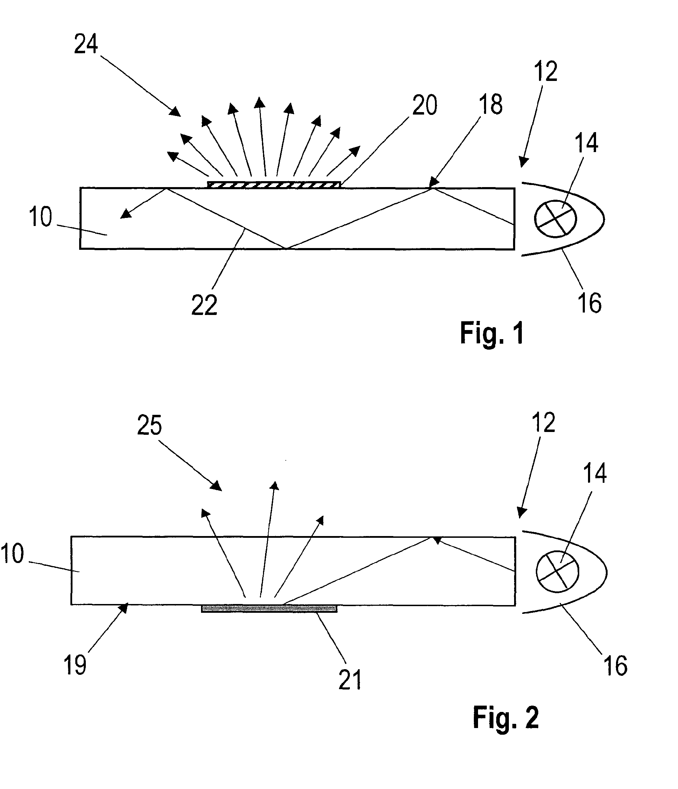

Figur 1 zeigt in schematischer Ansicht und im Schnitt eine Platte 10 aus Glas oder einem transparenten Kunststoffmaterial, an dessen rechtem Randbereich 12 das Licht einer Lampe 14 eingekoppelt wird. An der Lampe 14 ist eine Spiegeleinrichtung 16 angeordnet, welche das Licht der Lampe 14 auf den Randbereich 12 fokussiert und den vom Lichtleiter 10 abgekehrten Raum abschattet. An der oberen Außenfläche 18 der Platte 10 ist eine Streulichtstruktur 20 aufgebracht, wobei das Licht nach oben ausgekoppelt wird. Das eingekoppelte Licht 22 wird innerhalb der Platte 10 durch Totalreflexion geführt. An der Streulichtstruktur 20 wird das Licht aus der als Lichtleiter wirkenden Platte 10 als Streulicht 24 ausgekoppelt.

Figur 2 zeigt eine ähnliche Anordnung. Der Unterschied zu der in Figur 1 dargestellten Anordnung besteht darin, dass eine Streulichtstruktur 21 an der unteren Außenfläche 19 der Platte 10 aufgebracht ist. Hierbei wird das Licht aus der als Lichtleiter wirkenden Platte 10 an der Streulichtstruktur 21 durch die Platte 10 hindurch als Streulicht 25 nach oben ausgekoppelt.

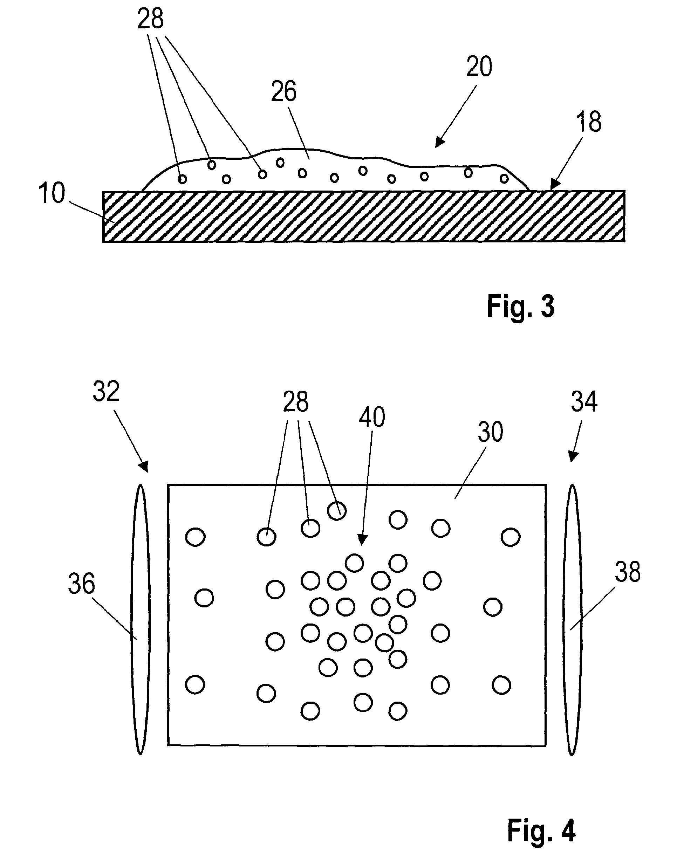

Figur 3 zeigt in schematischer Ansicht und im Schnitt eine Platte 10 aus Glas, auf dessen oberer Fläche 18 eine aus einer Matrix 26 aus Glasfluss und einer Vielzahl von farblosen oder gefärbten Streupartikeln 28 gebildete Streulichtstruktur 20 aufgebracht ist. Die Streupartikel 28 werden aus in der Glasfluss-Matrix 26 eingelagerten Pigmenten gebildet. Die Glasfluss-Matrix 26 weist im wesentlichen denselben Brechungsindex wie das Material der Platte 10 auf, wohingegen der Brechungsindex der Streupartikel 28 von dem Brechungsindex der Matrix 26 verschieden ist. Somit kann, wie bereits anhand der Figur 1 gezeigt, das in der Platte 10 durch Totalreflexion geführte Licht 22 an der Streulichtstruktur 20 in die Matrix 26 eindringen und wird an den Streupartikel 28 gestreut und, je nach Streupartikel 28, als farbloses oder farbiges Streulicht 24 ausgekoppelt.

Die in Figur 3 gezeigte Streulichtstruktur 20 kann in einer (nicht gezeigten) alternativen Ausführungsform auch aus einem transparenten, thermoplastischen oder duroplastischen Kunststoffmaterial bestehen. Auch können Lackschichten, die UV-härtend ausgebildet sind, für eine Streulichtstruktur verwendet werden.

Ein einfacher Aufbau einer Streulichtstruktur 20 kann, wie in Figur 3 gezeit, dadurch erzeugt werden, dass die Streulichtstruktur 20 als transparente Schicht aufgebracht wird, in welche mikroskopische Teilchen als Streupartikel 28 enthalten sind. Dabei werden die unterschiedlichen Materialien für die Matrix 26 und die Streupartikel 28 vor dem Auftragen miteinander gemischt. Je nach Anzahl der eingelegten Partikel 28 kann eine unterschiedlich starke Streuwirkung erhalten werden. Wenn jedoch die Anzahl der Streupartikel 28 über die Fläche des Lichtleiters bzw. der Platte 20 konstant ist, nimmt die Lichtauskopplung mit steigendem Abstand von der Lampe ab. Dies kann für bestimmte Anwendungen nachteilhaft sein, da die Lichtverteilung inhomogen ist.

Eine homogene Lichtverteilung kann dadurch erreicht werden, dass die Dichte der Streupartikel 28 in Abhängigkeit von deren Abstand zur einkoppelnden Lichtquelle variiert wird. Figur 4 zeigt in schematischer Draufsicht einen plattenförmige Lichtleiter 30, beispielsweise einen LCD-Bildschirm, in den an zwei Randbereichen 32 und 34 Licht aus jeweils einer Lichtquelle 36 und 38 eingekoppelt wird. Im mittleren Bereich 40 der Lichtleiterplatte 30 ist die Dichte der Streupartikel 28 größer als im Randbereich 32 bzw. 34. Dies ermöglicht eine gleichmäßige Lichtauskopplung über die gesamte Lichtleiterplatte 30 hinweg.

Die variable Anordnung der Streupartikel 28 an der Lichtleiterplatte 30 wird dadurch erreicht, dass in einem ersten Schritt ein (nicht gezeigtes) transparentes Material, beispielsweise ein thermoplastischer Kunststoff, als Streulichtstruktur aufgebracht wird, welche keine Streupartikel enthält. Das transparente Material dient dazu, das in der Lichtleiterplatte 30 durch Totalreflexion geführte Licht auszukoppeln. Dazu besitzt das transparente Material etwa denselben Brechungsindex wie die Lichtleiterplatte 30. In einem weiteren Schritt werden die Streupartikel 28 gemäß einer vorab berechneten Dichteverteilung rechnergesteuert auf die Streulichtstrukturen aufgebracht, wodurch eine homogene Lichtauskopplung mit gewünschten Farbeffekten realisiert werden kann.

Für großflächige Anwendungen mit kleinen Stückzahlen oder als Einzelanfertigungen, bei denen die Genauigkeitsanforderungen im Bereich einiger 10 µm liegen können, wie dies beispielsweise bei großflächigen Leuchtanzeigen der Fall ist, können die Streulichtstrukturen 20 oder 21 auf einfache Weise und kostengünstig aufgebracht werden. Dazu werden die Streulichtstrukturen 20 oder 21 direkt, ohne zusätzliche Maskentechnik oder Werkzeugvorbereitung auf eine Oberfläche 18 oder 19 einer transparenten, als Lichtleiter dienenden Platte 10 aufgebracht und fixiert, wie bereits anhand der Figuren 1 und 2 beschrieben.

Geringe Prozesszeiten für hohen Durchsatz und eine hohe Flexibilität bei der Gestaltung der Streulichtstrukturen werden durch ein sogenanntes Non-Impact-Verfahren realisiert, bei dem das Material für die Ausbildung von Streulichtstrukturen ohne mechanische Einwirkung beispielsweise eines Druckkopfes direkt auf ein Substrat bzw. eine Lichtleiterplatte aufgebracht wird.

Für die Herstellung der vorstehend beschriebenen Streulichtstrukturen an Glasflächen wird erfindungsgemäß ein sogenanntes Computer-to-glass (CTG) Verfahren verwendet.

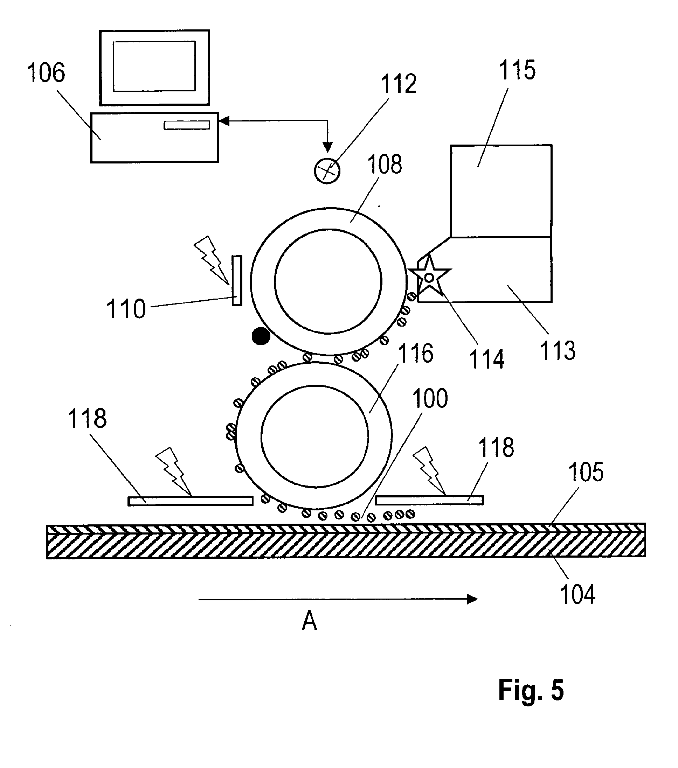

Figur 5 zeigt in schematischer Ansicht und im Schnitt eine Ausführungsform einer Vorrichtung zum Aufbringen von Streulichtstrukturen 100 auf die Oberfläche 102 einer Glasplatte 104 nach dem Computer-to-glass (CTG) Verfahren. Die Oberfläche der Glasplatte 104 kann in Vorbereitung auf das CTG-Verfahren in einem ersten (nicht gezeigten) Schritt mit einer leitfähigen Elektrodenschicht 105 versehen werden. Dieser Verfahrensschritt kann jedoch auch ausgelassen sein, insbesondere wenn die Glasplatte 104 bereist eine leitfähigen Elektrodenschicht 105 beispielsweise aus Zinnoxid aufweist.

Die in Fig. 5 dargestellte Ausführungsform dient speziell zur elektrophotographischen Übertragung von Streulichtstrukturen 100 auf die Glasplatte 104. Die Funktionsweise einer solchen Vorrichtung entspricht prinzipiell der eines Laserdruckers oder Kopierers.

Eine Photoleitertrommel 108 rotiert und deren Oberfläche wird so an einem geladenen Ladekoroton 110 vorbeibewegt, dass dieses Ladung an die Photoleitertrommel 108 abgibt und die Oberfläche der Photoleitertrommel 108 gleichmäßig aufgeladen wird. Die aufgeladene Oberfläche der Photoleitertrommel 108 wird dann durch deren Rotation an einer Leuchtdioden-Anordnung 112 vorbeibewegt. Diese wird wiederum von einer Recheneinrichtung 106 angesteuert, so dass die Photoleitertrommel 108 entsprechend dem auf die Oberfläche des Glassubstrats 104 zu übertragenen Motiv belichtet wird. An den belichteten Stellen wird die Ladung an der Oberfläche abgeleitet, so dass die Photoleitertrommel 108 ein unsichtbares elektrisches Abbild des Motivs erhält.

Alternativ kann auch eine Vorlage benutzt werden, die nach Art eines Kopierers nach dem Xerographie-Verfahren auf das Glassubstrat 104 übertragen wird. Dazu wird anstelle der in Figur 5 gezeigten Leuchtdioden-Anordnung 112 eine (nicht gezeigte) Anordnung aus einer Beleuchtungslampe, einem Objektiv und mehrerer Umlenkspiegel verwendet. Mit dieser Anordnung wird die Vorlage auf die Photoleitertrommel 108 projiziert.

Alternativ können Leuchtdioden-Arrays oder eine Anordnung von Schwingspiegel-Arrays zum Einsatz kommen. In einer noch weiteren alternativen Ausführungsform kann die Leuchtdioden-Anordnung 112 durch einen rotierenden Polygonspiegel ersetzt sein, dem eine Laserquelle zugeordnet ist und der das Laserlicht zeilenweise über die Oberfläche der Photoleitertrommel 108 projiziert.

Mit einer Magnetbürste 114 einer Entwicklungseinheit 115 wird dann Toner aus einem Tonerbehälter 113 auf die Photoleitertrommel 108 übertragen. Zwischen der Photoleitertrommel 108 und der Entwicklungseinheit 115 wird dazu außerdem eine Vorspannung gelegt. Der Toner haftet nur an den durch die Belichtung entladenen Bereichen der Photoleitertrommel 108. Anders als bei einem Laserdrucker wird aber der Toner nicht direkt von der Photoleitertrommel 108 auf das Glassubstrat 104 übertragen. Da das Glassubstrat 104 aus einem vergleichsweise harten Material besteht, wird der Toner vielmehr von der Photoleitertrommel 108 zunächst auf eine Transfertrommel 116 und erst dann auf das Glassubstrat 104 übertragen. Die Transfertrommel 116 weist eine weiche Oberfläche, wie etwa aus Gummi auf, die sich der Oberfläche des Glassubstrats 104 gut anpassen kann, so dass ein guter Kontakt des Glassubstrats 104 zum Toner auf der Transfertrommel 116 erreicht wird.

Das in Richtung des Pfeils A mit einem Durchsatz von 1 bis 10 m/min geführte Glassubstrat 104 wird mit einem Übertragungskoroton 118 ebenfalls gleichmäßig aufgeladen, so dass der Toner von der Transfertrommel 116 abgezogen wird. Anstelle einer Aufladung mittels eines Übertragungskorotons 118 kann eine uniforme Aufladung auch einfach durch direkten elektrischen Kontakt mit einer (nicht gezeigten) Spannungsquelle erzielt werden, da die Oberfläche des Glassubstrats aufgrund der vorangegangenen Beschichtung mit der leitfähigen Elektrodenschicht 105 gut leitfähig ist und die Ladung sich gleichmäßig verteilt. In einem nachfolgenden Fixiervorgang wird die mit dem Toner beschichtete Oberfläche auf eine moderate Temperatur unterhalb von 250 °C erwärmt und der Toner verfestigt.

Dieser Vorgang des Aufbringens einer Widerstandsschicht mit zumindest einer Struktur ist unter anderem deshalb von Vorteil, da die Beschichtung vergleichsweise schnell durchgeführt werden kann.

Insbesondere bei der Beschichtung eines Glassubstrats 104 kann ein transparenter keramischer Toner mit Glasflusspartikeln zum Einsatz kommen. Zusätzlich können je nach Anforderung in diesem Toner auch Streuzentren aus Glasflusspartikeln mit einem anderen Brechungsindex eingelagert oder vermischt sein. Ein derartiger Toner wird im Anschluss an das Aufbringen bei Temperaturen von mehr als 600°C eingebrannt.

Mit einer derartigen elektrophotographischen Beschichtung lässt sich eine laterale Auflösung der Struktur von etwa 20 µm erreichen. Es kann sowohl ein Graustufendruck mit variabler Schichtdicke, etwa mit einer Schichtdicke zwischen 1 µm und 8 µm, als auch ein Rasterdruck durchgeführt werden, um Helligkeitsabstufungen des Leuchtbildes zu erreichen.

Durch mehrfache Wiederholung des Druckvorgangs kann auch leicht eine Streulichtstruktur 100 so aufgebracht werden, dass sie Bereiche mit stufenweise unterschiedlicher Schichtdicke aufweist. Eine vorbestimmte Anzahl von Streulichtzentren 28 kann dabei pro Flächeneinheit angeordnet werden, wobei die Streulichtzentren 28 gemäß einer vorgegebenen Dichteverteilung auf dem Lichtleiter) verteilt werden können.

Um eine farbige Wiedergabe auf dem Glassubstrat 104 zu erzeugen, muss bei einem Vielfarbdruck für jede der üblicherweise vier zur Verfügung stehenden Toner-Farben ein Druckvorgang gemäß des Vierfarbdrucks durchgeführt werden.

Mittels des vorstehend beschriebenen CTG-Verfahrens können neben Keramikschichten auch Polymerschichten, beispielsweise mit thermoplastischem Polymer als Toner auf Glas- oder Polymersubstraten abgeschieden werden. Zur Herstellung der Streulichtstrukturen 100 können dabei transparente Toner zur direkten Lichtauskopplung oder farbige Toner zur Beeinflussung des Farborts eingesetzt werden. Dies können beispielsweise transparente oder farbige Polymere ohne oder mit weißen oder farbigen Streupartikeln sein, über deren Volumenanteil die Farbdichte der Endschicht voreingestellt werden kann.

Das CTG-Verfahren ist auf die Anforderungen der Oberflächenbeschichtung von Isolatoren optimiert, wobei eine Behandlung des Glassubstrats 104 in einem (nicht dargestellten) vorangehenden Verfahrensschritt vorgenommen werden kann, was den Tonertransfer von der Transfertrommel 116 auf das Glasubstrat verbessert.

Auch können leitfähige Substrate anstatt dem in Figur 5 gezeigten Glassubstrat 104 zur Verbesserung der Tonerübertragung verwendet werden. Ebenso wie das mit der Elektrodenschicht 105 versehene Glassubstrat 104 kann dann die Bauteiloberfläche leicht mittels der angelegten Spannung uniform auf ein gewünschtes Potential eingestellt werden. Beispiele für derartige Substrate sind Gläser, die bereits eine dünne, transparente Zinnoxid-Schicht aufweisen. Derartige Gläser besitzen damit eine gewisse Leitfähigkeit.

Mittels des CTG-Verfahrens können auch Beschichtungen mit Mehrfachstrukturen einfach und durchsatzoptimiert durch Hintereinanderanordnung mehrer CTG-Anlagen in der Produktion erreicht werden.

Weiter kann die Übertragung von der Transferwalze auf das Substrat im Heißtransfer erfolgen. Dabei wird das Substrat auf Temperaturen von 100 bis 200°C, typischerweise 120 bis 150°C, vorgeheizt. Der Toner schmilzt dabei bei Kontakt mit dem heißen Substrat auf und erstarrt anschließend auf dem sich abkühlenden Substrat. Eien zusätzliche Fixierung kann dabei entfallen.

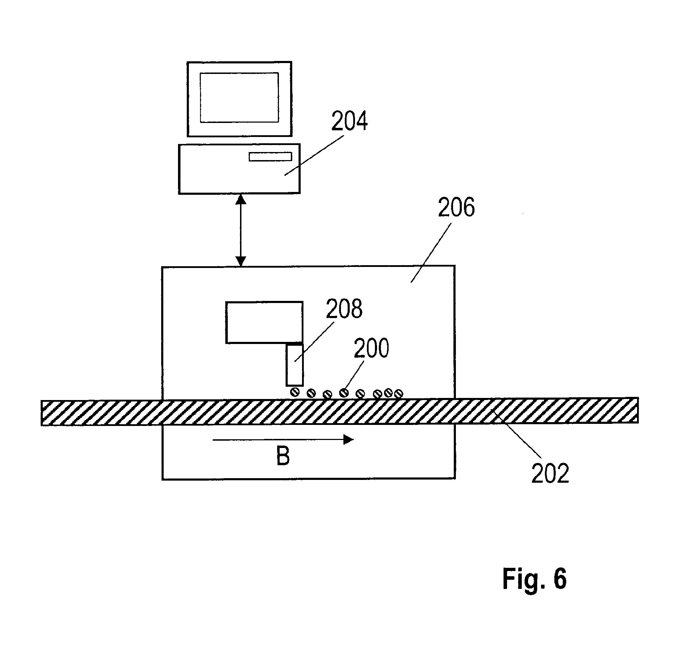

In Fig. 6 ist schematisch eine weitere Ausführungsform einer Vorrichtung zum Aufbringen einer Streulichtstruktur 200 auf eine in Richtung des Pfeils B geführte Glasplatte 202 gezeigt. Die Vorrichtung umfasst ebenfalls eine Recheneinrichtung 204. Die Recheneinrichtung 204 steuert eine Druckvorrichtung 206 mit einem Druckkopf 208. Als Druckkopf 208 kann beispielsweise ein Tintenstrahl-Druckkopf bzw. Ink-Jet-Druckkopf verwendet werden, der mit einem geeigneten Lack als Beschichtungsmaterial befüllt wird.

Das gewünschte Motiv kann so direkt durch die Recheneinrichtung 204 mit der mit dieser verbundenen Druckvorrichtung 206 in Form einer Streulichtstruktur 200 auf die Glasplatte 202 übertragen werden.

Gemäß einer weiteren (nicht gezeigten) Ausführungsform können Streulichtstrukturen auch mittels eines Airbrush-Verfahrens aufgebracht werden, wobei die Beschichtungsmaterialien aus feinen Düsen auf das Substrat aufgesprüht werden.

Gegenstände, die nach dem erfindungsgemäßen Verfahren hergestellt werden, sind Leuchtschilder in typischerweise kleiner Auflage. Beispiele dafür sind: großflächige OLEDs oder ELEDs, in der Display-Technologie Streuscheiben für Backlights von Handy, PDA oder generell LCD, Hinweis- und Leuchttafeln in der Werbung oder als Signale, Schalter- oder Sensorbeleuchtung, Leuchtböden und sonstige Spezialbeleuchtung im Haishalt, Lichtflächen, Hinweis- und Leuchttafeln, Schalter- und Sensorbeleuchtung im Automotive-Bereich und der Avionik, Notbeleuchtung, transportable Leuchten. Zusätzlich sind weitere Anwendungen in allen Bereichen der Elektronik, Optik und Optoelektronik denkbar.

## Patentansprüche

1. Verfahren zur Herstellung von Streulichtstrukturen (20, 21, 100, 200) an flächigen Lichtleitern (10, 30, 104, 202), in welche Licht zur Sichtbarmachung der Streulichtstrukturen (20, 21, 100, 200) eingekoppelbar ist, wobei die Streulichtstrukturen (20, 21, 100, 200) gemäß einer vorgegebenen Anordnungsvorschrift auf einer Oberfläche (18, 19) des Lichtleiters (10, 30, 104, 202) aufgebracht werden,
**dadurch gekennzeichnet, dass**
die Streulichtstrukturen (20, 21, 100, 200) im Non-Impact-Verfahren direkt auf den Lichtleiter (10, 30, 104, 202) aufgebracht werden.

2. Verfahren nach Anspruch 1,
**dadurch gekennzeichnet, dass**
das Aufbringen der Streulichtstrukturen (20, 21, 100, 200) das Aufbringen eines fluiden Beschichtungsmaterials umfasst, das nach dem Aufbringen verfestigt wird.

3. Verfahren nach Anspruch 2,
**dadurch gekennzeichnet, dass**
für das fluide Beschichtungsmaterial ein aushärtbarer Lack, ein thermoplastisches oder duroplastisches Kunststoffmaterial oder ein Glasfluss ausgewählt wird.

4. Verfahren nach Anspruch 1,
**dadurch gekennzeichnet, dass**
das Aufbringen der Streulichtstrukturen (20, 21, 100, 200) das Aufbringen eines Toners als Beschichtungsmaterial umfasst, das nach dem Aufbringen fixiert wird.

5. Verfahren nach Anspruch 4,
**dadurch gekennzeichnet, dass**
für den Toner ein Glasfluss, Glasflusspartikel, ein thermoplastisches oder duroplastisches Polymer oder dergleichen Kunststoffmaterial ausgewählt wird.

6. Verfahren nach einem der Ansprüche 2 bis 5,
**dadurch gekennzeichnet, dass**
für das Beschichtungsmaterial ein Material ausgewählt wird, welches im verfestigten bzw. fixierten Zustand transparent oder farbig ausgebildet ist und einen Brechungsindex aufweist, der annähernd gleich dem Brechungsindex des Lichtleiters (10, 30, 104, 202) ist.

7. Verfahren nach einem der Ansprüche 1 bis 6,
**dadurch gekennzeichnet, dass**
für das Substrat des Lichtleiters ein Glas, transparenter Kunststoff oder dergleichen Kunststoffmaterial ausgewählt wird.

8. Verfahren nach einem der Ansprüche 2 bis 7,
**dadurch gekennzeichnet, dass**
dem Beschichtungsmaterial farblose oder farbige Streulichtzentren (28) beigefügt werden, deren Brechungsindex vom Brechungsindex des verfestigten bzw. fixierten Beschichtungsmaterial verschieden ist.

9. Verfahren nach Anspruch 8,
**dadurch gekennzeichnet, dass**
für die Streulichtzentren (28) Farbpigmente oder dergleichen farbige oder farblose Streupartikel aus einem Glas- oder Kunststoffmaterial ausgewählt werden.

10. Verfahren nach Anspruch 8 oder 9,
**dadurch gekennzeichnet, dass**
eine vorbestimmte Anzahl von Streulichtzentren (28) pro Flächeneinheit angeordnet wird, wobei die Streulichtzentren (28) gemäß einer vorgegebenen Dichteverteilung auf dem Lichtleiter (10, 30, 104, 202) verteilt werden.

11. Verfahren nach einem der Ansprüche 8 bis 10 und einem der Ansprüche 4 bis 7,
**dadurch gekennzeichnet, dass**
für den Toner ein Material ausgewählt wird, welches die Streulichtzentren (28) aufweist.

12. Verfahren nach einem der Ansprüche 8 bis 11,
**dadurch gekennzeichnet, dass**
aus dem ausgehärteten bzw. fixierten Beschichtungsmaterial eine Matrix (26) für die Aufnahme der Streulichtzentren (28) gebildet wird.

13. Verfahren nach einem der Ansprüche 1 bis 12,
**dadurch gekennzeichnet, dass**
das Aufbringen der Streulichtstrukturen (20, 21, 100, 200) durch Bedrucken mittels eines rechnergesteuerten, berührungslos wirkenden Druckkopfes (208) erfolgt.

14. Verfahren nach einem der Ansprüche 1 bis 12,
**dadurch gekennzeichnet, dass**
das Aufbringen der Streulichtstrukturen (20, 21, 100, 200) das Aufbringen einer Schicht durch elektrophotographisches Beschichten umfasst.

15. Verfahren nach einem der Ansprüche 1 bis 14,
**dadurch gekennzeichnet, dass**
das Aufbringen der Streulichtstrukturen (20, 21, 100, 200) das Aufbringen einer leitfähigen Elektrodenschicht (105) auf das Lichtleitersubstrat (104) umfasst.

16. Verfahren nach einem der Ansprüche 1 bis 14,
**dadurch gekennzeichnet, dass**
das Lichtleitersubstrat (104) eine leitfähige Elektrodenschicht (105) aufweist.

17. Verfahren nach Anspruch 15 oder 16,
**dadurch gekennzeichnet, dass**
die leitfähige Elektrodenschicht (105) eine Zinnoxid-Schicht, eine Indium-dotierte Zinnoxid-Schicht (ITO) oder dergleichen leitfähige Schicht ist.

18. Verfahren nach einem der Ansprüche 9 bis 17,
**dadurch gekennzeichnet, dass**
das Aufbringen der Streulichtstrukturen (20, 21, 100, 200) das Aufbringen des Beschichtungsmaterial in einem Verfahrensschritt und das Aufbringen der Streulichtzentren (28) in einem anschließenden Verfahrensschritt umfasst.

19. Verfahren nach einem der Ansprüche 9 bis 18,
**dadurch gekennzeichnet, dass**
Aufbringen der Streulichtzentren (28) gemäß einer vorbestimmten Verteilung rechnergesteuert erfolgt.
